# EUROPEAN PATENT SPECIFICATION

(11) **EP 1 469 536 B1**
(45) Date of publication and mention of the grant of the patent: **10.10.2012**
(21) Application number: 03008629.2
(22) Date of filing: 15.04.2003
(51) Int. Cl.: H01M 2/12

(54) **Cap for batteries**
Verschlussstopfen für Batterien
Bouchon pour batteries

(43) Date of publication of application: 20.10.2004
(73) Proprietor: Fabbrica Italiana Accumulatori Motocarri Montecchio - F.I.A.M.M. S.p.A., 36075 Montecchio Maggiore (Vicenza) (IT)
(72) Inventor: Aliberti, Roberto, 36075 Montecchio Maggiore (Vicenza) (IT); Trapula, Roberto, 36075 Montecchio Maggiore (Vicenza) (IT); Poletto, Adriano, 36075 Montecchio Maggiore (Vicenza) (IT)
(74) Representative: Lecce, Giovanni

(56) References cited:
- GB-A- 916 370
- US-A- 3 664 879
- US-A- 3 798 073

## Description

The present invention refers to a cap for batteries.

More particularly, the present invention refers to a cap especially suitable for the use on lead acid starter batteries possibly provided with a centralized degassing system.

As it is known, the lead acid batteries comprise a container body provided with multiple and separated compartments or cells, in each of them at least one couple of electrodes immersed into the electrolyte is placed A seal lid is fastened to the container body comprising at least a plurality of caps closing the mouthpiece of the single cells being in their turn associated to a covering element which is overlapped to the lid

In the lead acid batteries, the main requirement is the prevention of an accidental leakage of the electrolyte and its separation from the gases forming inside the cells during the charging phase

The known batteries, to this purpose, are provided with separation walls in the upper part of the lid and around the mouthpiece of each cell that form a labyrinth path in order to prevent the leakage of the electrolyte especially in cases of great inclination or turnover of the same batteries. The single caps are generally provided with many pieces that are suitable for holding the liquids, for their separation from the gases and, if necessary, for the piping of the gases only in order to remove them through a unique pipe.

The drawback of these kinds of coverage is their complex manufacturing and, therefore, they do not exclude the danger that, in particularly extreme conditions, even small quantities of electrolyte may come out of the battery body.

GB 916 370 discloses a cap provided with a spiral-shaped element.

Object of the present invention is to remedy the above-mentioned drawbacks.

More particularly, object of the present invention is to provide a cap to close the cells of a battery, especially of the lead acid type, being provided with means fit for the separation of the gases from the electrolyte and for the prevention of leakages of the latter from the battery body.

A further object of the present invention is to provide a cap for batteries constituted by a very low number of components and shaped in such a way to substantially stop the section wherein the liquid passes through along the vertical axis.

A further object of the present invention is to provide a cap for batteries fit to ensure a high resistance and liability level in time that is easily manufactured and at a low cost.

According to the present invention, these and other purposes that will result from the following description are achieved by a cap especially for lead acid starter batteries constituted by two pressure-inserted the first one of which comprising an external body constituted by an upper base or socket that extends in its lower part into a cylindrical protrusion whose end portion has an overturned truncated conical configuration and the second part comprising an insert which is coaxially placed in said body and constituted by a central support or hollow column closed in its upper part and provided with an integral plate on its upper end and with a spiral-shaped element constituted by at least two turns that are leaned outward that develop in a radial way from said support; said turns comprise partial interruption means of the spiral-shaped winding.

The cap of the present invention is preferably made of polypropylene or high-density polyethylene or other suitable plastic material.

The manufacturing and functional features of the cap for batteries of the present invention will be better understood from the following description, wherein reference is made to the tables of the attached drawings representing a preferred and non-limitative embodiment of it which is given by way of example wherein:

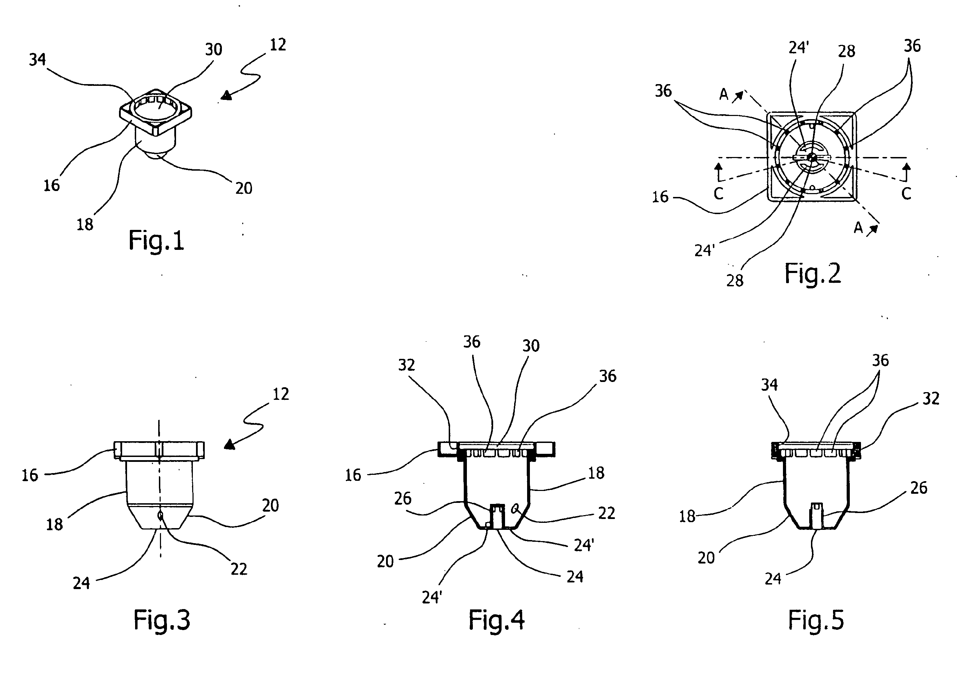

Figure 1 is a schematic perspective view of the external body of the cap for batteries of the present invention,
Figure 2 is a schematic plan view of the body of Figure 1;
Figure 3 is a schematic view of a longitudinal section of the body of Figure 1;
Figures 4 and 5 are respectively the schematic views of the sections of the body of Figures from 1 to 3 along the lines A-A and C-C of Figure 2;
Figure 6 is a schematic side view of the insert associated to said body;
Figures 7 and 8 are schematic views of longitudinal sections of the insert of Figure 6;
Figure 9 is a schematic plan view of the cap for batteries constituted by the coupling of the body of the Figures from 1 to 5 and of the insert of the Figures from 6 to 8;
Figure 10 is a schematic view of a longitudinal section of said cap along the line C-C of Figure 9;
Figure 11 is a schematic perspective view of the cap of the Figures 9 and 10.

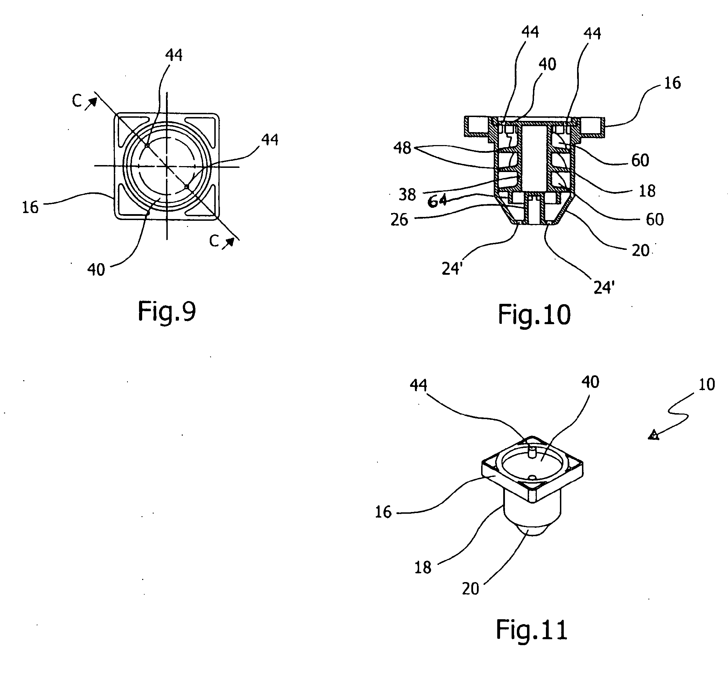

With reference to the above-mentioned figures, the cap for batteries of the present invention, which is marked in its whole with 10 in Figure 11, comprises and external body 12 made of plastic material such as polypropylene or high-density polyethylene and an insert 14 which is coaxially inserted and stabilized in said external body 12.

The external body 12 comprises an upper base or socket 16 with the shape of a plate and a limited height and a quadrangular or circular-shaped base and an integral cylindrical protrusion 18 extending outwards from the lower end of said socket 16.

Said cylindrical protrusion 18, in its lower part, progressively narrows its diameter and defines an overturned truncated conical-shaped portion 20.

Along the side surface of said portion 20, at least a pass-through opening is obtained, preferably four opposite pass-through openings 22 having for instance an ovoid or circular shape, whose total surface is comprised between 20 and 40 mm², preferably of 28 mm². The lower end of the overturned truncated conical-shaped portion 20 is flat and comprises a bridge 24 that extends in a diametrical way and axially elongates towards the inner part of the body 12 in an integral cylindrical protrusion 26. The bottom part of said cylindrical protrusion 26 is directed towards the upper base or socket 16 and comprises a plurality of micro-holes 28. On the opposite sides of the bridge 24 which does not completely close the circular opening of the lower end of the portion 20, the same number of arc-shaped pass-through openings 24' remains at sight.

Said upper base or socket 16 of the body 12 is provided with a circular-shaped mouthpiece 30 which is peripherally delimited by collar 32 whose inner side surface is provided with a hollow or annular mitering 34.

Along said inner surface of the collar 32 a plurality of ribs 36 that are parallel to the vertical axis of the external body 12 is obtained; they extend at the bottom of said mitering 34 and they are separated by it of about 1.8 and 2.8 mms that substantially correspond to the height of the upper base or plate of the insert 14 described here below. The socket 16 of each external body 12 is sized and shaped in such a way to match with the inner face of a strip or bridge which is known in itself, that is applied and generally fastened to the lid of the batteries.

The insert 14, which is represented in detail in Figures from 6 to 8, is preferably made of plastic material such as polypropylene or high-density polyethylene. Said insert 14 comprises a central support or vertical hollow column 38 provided with an integral plate 40 in its upper part that can be, by way of example, a circular-shaped plate directed at right angle with respect to that support or column. The edge of the plate 40 defines a shaped profile as it is provided with an annular projection 42 whose shape is complementary to the one of the annular mitering 34 obtained on the collar 32 of the external body 12 The external diameter of the annular projection 42 substantially corresponds to the one of said mitering 34 except for possible coupling tolerances. The plate 40 is provided with at least one pass-through hole, preferably of two opposite pass-through holes 44 that are externally obtained with respect to the central support or hollow column 38.

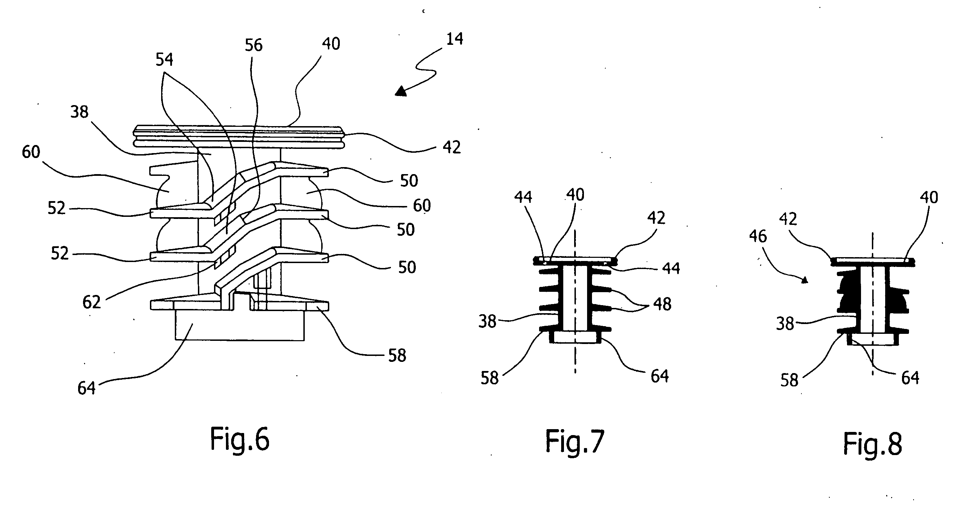

A spiral-shaped element, marked in its whole with 46 in Figure 8, is integral to the external side surface of the hollow column 38. Each turn 48 of said spiral-shaped element 46 comprises a first section 50 and a second section 52 placed at different heights and parallel between them and the plate 40, these sections are connected between them by an intermediate link section 54 which is slightly tilted and preferably provided with at least one sharp edge 56. With respect to the central support or hollow column 38, the turns 48 are leaned outwards opposite to the plate 40, with an angle comprised between 2° and 20°, preferably between 4° and 8°.

The number of the turns 48 is not critical; in the Figures, the turns 48 are preferably 3 and the one placed at the lower level seamlessly connects to a substantially flat further turn 58 that is open downwards in more points, preferably four, in such a way that the free surface is comprised between 20% and 30% of the section of the cap at the same height. Along at least one of the turns, preferably along two adjacent turns, two opposite reeds 60 are obtained acting as a barrier for the electrolyte The reeds 60 develop at right angle with respect to the trend direction of the electrolyte flow as they are aligned to the vertical axis of the insert 14.

On one side, said reeds 60 are integral to the central support or hollow column 38 and, on the opposite side, they show an arc-shaped profile that defines, with respect to the external body 12 in which the insert 14 is inserted, an area suitable for the upward flow of the gases in such a way to create an interruption of the section in that point which is comprised between 60% and 80% of the pass-through surface of the gas.

According to a further preferred feature of the present invention, in correspondence with at least one link point among the turns 48, a flap 62 acting as a drop-breaker (see Figure 6) is obtained. Said flap 62 is constituted by a small projection, for instance a prism-shaped one, integral to the lower face of the leaned link section 54 of the turns 48 and it is top-down directed along a direction which is substantially parallel to the vertical axis of the insert 14.

The flaps 62 interrupt the pass-through section of the flow of the liquid; from the tests carried out, such interruption is comprised between 40% and 60% of the flow quantity.

From the lower face of the further turn 58, an integral ring 64 is developed, this ring is obtained in a position close to the base of the insert 14 and its diameter is higher than the external one of the central support or hollow column 38

In particular, said diameter of the ring 64 is slightly lower than the internal diameter of the overturned truncated conical-shaped portion 20 of the cylindrical protrusion 18 of the external body 12 which is defined in the middle area of said portion 20 to which the ring 64 approaches when the insert 14 is housed into the same body 12. In Figure 10 this condition wherein the insert 14 is inserted and stabilized in the body 12 is schematised by way of example. The ring 64 touches the inner surface of said portion 20 and substantially limits the possible passage of the liquid that could get into the body 12 through the openings 24' that are formed on the sides of the bridge 24.

During the assembling, the insert 14 is placed in the body 12 through the mouthpiece 30 and it is pressure-stabilized in it, provided that the annular projection 42 formed along the edge of the plate 40 inserts into the annular mitering 34 obtained along the collar 32 of the same body.

The lower face of the plate 40 matches with the ribs 36 placed at the bottom of said annular mitering 34.

As it can be noticed from the previous description, the advantages obtained by the present invention are clear.

With the cap for batteries of the present invention the danger of leakage of the electrolyte from the cells is removed and the separation between liquid and gas is simultaneously optimised. This result is obtained thanks to the insert 14 whose turns 48, 58 form a long and articulated path which is interrupted by barriers constituted by reeds 60 and by flaps 62 that, in any case, do not prevent the upward flow of the gases that could come out of the holes 44 of the plate 40 and piped outside the body of the battery.

A great advantage is also obtained by the possibility of substantially separating the possible passage of the liquid that enters into the cap due to the presence of the ring 64 that creates a throat between the external body 12 and the insert 14 in correspondence of the lower end of the same cap.

The latter is constituted only by two components, that is to say the body 12 and the insert 14 that can be steadily and quickly fastened between them with a simple pressure-insertion operation.

Even though the present invention has been described and illustrated according to an embodiment that is given only by way of non-limitative example, some changes and variants can be made by a technician skilled in the art according to the above-mentioned description.

## Claims

1. A cap (10) for batteries, especially for lead acid batteries, **characterized by** the fact that it is constituted only by two parts that are pressure-inserted between them, one of them comprising an external body (12) constituted by an upper base or socket (16) extending into a cylindrical protrusion (18) in its lower part with an end portion (20) having an overturned truncated conical configuration and the second part comprising an insert (14) which is coaxially placed in said body (12) and constituted by a central support or hollow column (38) which is closed on its upper end by an integral plate (40) and it is provided with a spiral-shaped element (46) constituted by at least two turns (48, 58) that are leaned outward and develop in a radial way from said support (38); said turns (48, 58) comprising partial interruption means (60, 62) of the spiral-shaped winding.

2. The cap according to claim 1, **characterized by** the fact that the upper base or socket (16) of the external body (12) is constituted by a quadrangular or circular-shaped base plate with a circular mouthpiece (30) which is peripherally delimited by a collar (32); the inner side surface of said collar (32) being provided with an annular miter (34) and with a plurality of ribs (36) that are parallel to the vertical axis of the body (12) and are obtained at the bottom of said miter.

3. The cap according to any of the previous claims, **characterized by** the fact that the overturned truncated conical configuration end portion (20) of the cylindrical protrusion (18) is provided with one or more pass-through openings (22) whose total free surface is comprised between 20 and 40 mm², the base of said portion (20) is flat and defined by a bridge (24) that extends in a diametrical way; the opposite sides of said bridge (24) being provided with arc-shaped pass-through openings (24').

4. The cap according to any of the previous claims, **characterized by** the fact that the central support or hollow column (38) of the insert (14) is provided with an integral circular-based plate (40) in its upper end; along its edge an annular projection whose shape is complementary to the one of the miter (34) of said collar (32) of the body (12) is obtained; said plate being provided with at least one pass-through hole (44) which is externally obtained with respect to the support (38).

5. The cap according to any of the previous claims, **characterized by** the fact that each of the turns (48) that develop in a radial way from the central support (38), comprises a first section (50) and a second section (52) that are placed at different heights and are basically parallel to the plate (40) and connected between them by an intermediate link section (54) which is slightly leaned.

6. The cap according to any of previous claims, **characterized by** the fact that the turns (48) are leaned outward opposite to the plate (40) and their angle is comprised between 2° and 20°.

7. The cap according to the claim 6, **characterized by** the fact that the angle of the turns (48) is comprised between 4° and 8°.

8. The cap according to any of the previous claims, **characterized by** the fact that the interruption means of the spiral-shaped winding of the turns (48) are constituted by reeds (60) that are aligned with the vertical axis of the insert (14) and integral to the central support (38) on one side and have an arc-shaped profile on the opposite face that creates, in that point, an interruption of the section comprised between the 60% and the 80% of the pass-through surface of the gas.

9. The cap according to any of the previous claims, **characterized by** the fact that the interruption means of the winding of the turns is a flap (62) obtained in correspondence with at least one link point among the turns (48); said flap (62) being constituted by a prism-shaped projection integral to the lower face of the leaned section (54) of the same turns and being substantially directed parallel to the vertical axis of the insert (14).

10. The cap according to any of the previous claims, **characterized by** the fact that the turn (48) which is placed at a lower level, is connected to a further turn (58) in the lower part of the central support (38), this turn being substantially flat and open in one or more points, preferably four, in order to leave free a surface of the section comprised between 20% and 30% in that point; from the lower face of said further turn (58) an integral ring (64) develops; its diameter is higher than the external one of the central support or hollow column (38) and being slightly lower than the internal diameter of the overturned truncated conical portion (20) of the cylindrical protrusion (18) of the external body (12).

11. The cap according to any of the previous claims, **characterized by** the fact that it is made of polypropylene, high-density polyethylene or other suitable plastic material.

## Patentansprüche

1. Ein Gehäuse (10) für Batterien, vor allem für Bleibatterien, bestehend aus zwei Teilen, die beim Zusammendrücken einrasten. Der eine Teil umfasst einen Außenkörper (12), der oben in einen Sockel (16) ausläuft. Darunter sitzt ein zylindrischer Vorsprung (18), der sich nach unten hin (20) verjüngt. Der andere Teil besteht aus einem Einsatz (14), der koaxial in den Außenkörper (12) eingesetzt wird und aus einem runden zentralen Hohlkörper (38) besteht, dessen oberes Ende durch eine Platte (40) verschlossen wird. Er ist mit einem Spiralelement (46) versehen, das aus mindestens zwei vorspringenden Wülsten (48,58) besteht, die außen rund um den Hohlkörper (38) laufen. Diese Wülste (48,58) sind mit Blockierungsvorrichtungen (60,62) gegen das Weiterdrehen versehen.

2. Das Gehäuse ist gemäß Anforderung 1 **dadurch gekennzeichnet, dass** der obere Sockel (16) des Außenkörpers (12) aus einer quadratischen oder runden Sockelplatte mit runder Öffnung (30) besteht, die durch einen Rand (32) abgeschlossen wird. Die seitliche Innenfläche dieses Randes (32) hat einen ringförmigen Anschluss (34) und eine Anzahl von Kerben (36), die parallel zur Ache des Außenkörpers (12) und am Boden des Anschlusses beginnen.

3. Gemäß den vorherigen Anforderungen hat das Gehäuse ein sich verjüngendes Endstück (20) am zylindrischen Vorsprung (18) mit einer oder mehreren Öffnungen (22), deren freie Gesamtfläche zwischen 20 und 40 mm² liegt. Der Boden dieses Teils (20) ist flach und mit einer Brücke (24) versehen, die sich diametral erstreckt und zwei durchlaufende bogenförmige Öffnungen (24') hat.

4. Gemäß den vorherigen Anforderungen ist der zentrale Hohlkörper (38) des Einsatzes (14) am oberen Ende mit einer Platte mit rundem Sockel (40) versehen. Über den Rand läuft ein runder Vorsprung, dessen Form dem Anschluss (34) des Randes (32) des Außenkörpers (12) entspricht. Die Platte hat mindestens eine Öffnung (44) außen am Hohlkörper (38).

5. Gemäß den vorherigen Anforderungen haben die Wülste (48), die um den Hohlkörper (38) laufen, jeweils ein erstes (50) und ein zweites Segment (52). Sie sitzen auf unterschiedlicher Höhe parallel zur Platte (40) und sind durch ein leicht geneigtes Zwischensegment (54) miteinander verbunden.

6. Gemäß den vorherigen Anforderungen springen die Wülste (48) in die entgegengesetzte Richtung nach außen vor wie die Platte (40). Ihr Winkel liegt zwischen 2° und 20°.

7. Gemäß Anforderung 6 liegt der Winkel zwischen den Wülsten (48) bei einen Winkel von 4° bis 8°.

8. Gemäß den vorherigen Anforderungen bestehen die Blockierungsvorrichtungen der Spiralwülste (48) auf der einen Seite aus Lamellen (60), die über die vertikale Achse des Einsatzes (14) laufen und direkt am zentralen Hohlkörper (38) sitzen. Auf der gegenüberliegenden Seite haben sie ein Bogenprofil, durch das dort eine Unterbrechung des Segments entsteht, die 60 bis 80 % der Fläche umfasst, über die das Gas strömt.

9. Gemäß den vorherigen Anforderungen ist die Blockierungsvorrichtung der Spiralwülste eine Lasche (62), die mindestens einen Berührungspunkt mit den Wülsten (48) hat. Diese Klappe (62) besteht aus einem prismenförmigen Vorsprung, der mit der Unterseite des geneigten Segments (54) der Wulst verbunden ist, an die er sich anlehnt. Die Ausrichtung ist parallel zur vertikalen Achse des Einsatzes (14).

10. Gemäß den vorherigen Anforderungen ist die untere Wulst (48) mit einer weiteren Wulst (58) im unteren Teil des zentralen Hohlkörpers (38) verbunden. Diese ist flach und an einer oder mehreren Stellen offen (vorzugsweise vier), wodurch an dieser Stelle eine freie Fläche entsteht, die 20 bis 30 % des Segments ausmacht. Von der Unterseite dieser anderen Wulst (58) geht ein Ring (64) aus,
dessen Durchmesser größer ist als der Außendurchmesser des zentralen Hohlkörpers (38) und etwas kleiner als der Innendurchmesser des sich verjüngenden Teils (20) am zylindrischen Vorsprung (18) des Außenkörpers (12).

11. Gemäß den vorherigen Anforderungen besteht das Gehäuse aus Polypropylen, hochdichtem Polyethylen oder einem anderen geeigneten Kunststoff.

## Revendications

1. Un bouchon (10) pour batterie, en particulier pour les batteries au plomb, **caractérisé en ce qu'**il n'est formé que de deux parties qui sont introduites l'une dans l'autre par pression. L'une d'elles comprend un corps extérieur (12) formé par une base supérieure ou une douille (16) s'étendant dans une protubérance cylindrique (18) dans sa partie inférieure, avec une extrémité (20) ayant une configuration conique tronquée renversée. La seconde partie comprend une pièce rapportée (14) qui est placée coaxialement dans ledit corps (12) et est formée par un support central ou une colonne creuse (38), fermée à son extrémité supérieure par une plaque intégrale (40) et munie d'un élément en spirale (46) comprenant au minimum deux spires (48, 58) inclinés à l'extérieur et s'étendant radialement par rapport au dit support (38); lesdits spires (48, 58) comprenant des pièces d'interruption partielle (60, 62) de l'enroulement en spirale.

2. Le bouchon selon la revendication n°1, **caractérisé en ce que** la base supérieure ou la douille (16) du corps extérieur (12) est formée par un socle quadrangulaire ou circulaire avec un embout circulaire (30) délimité périphériquement par un collier (32) ; la surface interne dudit collier (32) étant munie d'un biseau annulaire (34) et d'un ensemble de nervures (36) qui sont parallèles à l'axe vertical du corps (12) et se situent au bas dudit biseau.

3. Le bouchon selon l'une des revendications précédentes, **caractérisé en ce que** l'extrémité (20) de la configuration conique tronquée renversée de la protubérance cylindrique (18) est dotée d'une ou plusieurs ouvertures percées (22) dont la surface libre totale est comprise entre 20 et 40 mm², la base de ladite partie (20) est plate et délimitée par une couronne (24) qui s'étend diamétralement ; les côtés opposés de ladite couronne (24) étant munis d'ouvertures arquées percées de part en part (24').

4. Le bouchon selon l'une des revendications précédentes, **caractérisé en ce que** le support central ou la colonne creuse (38) de la pièce rapportée (14) est muni d'une plaque intégrale circulaire (40) à son extrémité supérieure ; le bord porte une projection annulaire dont la forme est complémentaire de l'un des biseaux (34) dudit collier (32) du corps (12) ; ladite plaque étant percée par au moins un trou (44) depuis l'extérieur par rapport au support (38).

5. Le bouchon selon l'une des revendications précédentes, **caractérisé en ce que** chacune des spires (48), qui s'étendent radialement par rapport au support central (38), comprend une première section (50) et une seconde (52) placées à différentes hauteurs et fondamentalement parallèles à la plaque (40). Elles sont reliées entre elles par une section (54) de liaison intermédiaire qui est légèrement inclinée.

6. Le bouchon selon l'une des revendications précédentes, **caractérisé en ce que** les spires (48) sont inclinées vers l'extérieur à l'opposé de la plaque (40) et leur angle se situe entre 2° et 20°.

7. Le bouchon selon la revendication n°6, **caractérisé en ce que** l'angle des spires (48) est compris entre 4° et 8°.

8. Le bouchon selon l'une des revendications précédentes, **caractérisé en ce que** les pièces d'interruption de l'enroulement des spires (48) en spirale sont dotées de cavités (60) alignées sur l'axe vertical de la pièce rapportée (14) et intégrées d'un côté au support central (38). Elles ont un profil arqué sur la face opposée, créant, en ce point, une interruption de la section comprise entre 60% et 80% de la surface de passage du gaz.

9. Le bouchon selon l'une des revendications précédentes, **caractérisé en ce que** la pièce d'interruption de l'enroulement des spires est un écran (62) placé à hauteur d'au moins un point de liaison des spires (48) ; ledit écran (62) étant constitué par une projection en forme de prisme intégrée à la face inférieure de la section inclinée (54) de ces spires et étant fondamentalement parallèle à l'axe vertical de la pièce rapportée (14).

10. Le bouchon selon l'une des revendications précédentes, **caractérisé en ce que** la spire (48) qui est placée à un niveau inférieur, est connectée à une autre spire (58) dans la partie inférieure du support central (38). Cette spire étant fondamentalement plate et ouverte en un ou plusieurs points, de préférence quatre, afin de laisser en ce point une surface libre de la section comprise entre 20% et 30% ; un anneau intégral (64) s'étend de la face inférieure de la dite spire (58) ;
son diamètre est plus grand que l'extérieur du support central ou de la colonne creuse (38) et est légèrement inférieur au diamètre intérieur de la partie conique tronquée renversée (20) de la protubérance cylindrique (18) du corps extérieur (12).

11. Le bouchon selon l'une des revendications précédentes, **caractérisé en ce qu'**il est fabriqué en polypropylène, en polyéthylène à haute densité ou dans une autre matière plastique appropriée.
